# EUROPÄISCHE PATENTANMELDUNG

(11) **EP 0 741 176 A1**
(43) Veröffentlichungstag der Anmeldung: **06.11.1996**
(21) Anmeldenummer: 96106517.4
(22) Anmeldetag: 25.04.1996
(51) Int. Cl.: C09D 175/06, C08G 18/42, C08G 18/62

(54) **Wasserverdünnbare Zweikomponenten-Überzugsmasse auf Basis fremdemulgierter Alkydharze, ein Verfahren zu deren Herstellung und deren Verwendung**

(30) Priorität: 02.05.1995 DE 19515918
(71) Anmelder: HOECHST AKTIENGESELLSCHAFT, 65926 Frankfurt am Main (DE)
(72) Erfinder: Zöller, Joachim, Dr., 55128 Mainz (DE); Bittner, Annegret, 65187 Wiesbaden (DE); Urbano, Edmund, Dr., 8044 Graz (AT)

(57) **Zusammenfassung**

Wasserverdünnbare Zweikomponenten-Überzugsmasse, enthaltend eine Isocyanatkomponente mit einer Viskosität bei 23 °C von 50 bis 10 000 mPa·s, bestehend aus einem oder mehreren organischen polyfunktionellen Isocyanaten, und eine Alkydharzemulsion, deren Feststoff jeweils Massenanteile von 60 bis 98 % eines Alkydharzes, und 2 bis 40 % eines hydroxyfunktionellen Emulgators enthält, und die gegebenenfalls Massenanteile von organischen Lösemitteln bis zu 15 % bezogen auf die Masse der Emulsion enthält, und der Rest in der Emulsion Wasser ist.

## Beschreibung

Die Erfindung betrifft eine wäßrige Überzugsmasse, insbesondere eine wäßrige Zweikomponenten-Überzugsmasse, ein Verfahren für ihre Herstellung und ihre Verwendung in Ein- und Mehrschicht-Lackierungen.

Zweikomponenten-Polyurethanlacke des Standes der Technik haben aufgrund ihrer hervorragenden Eigenschaften eine große Bedeutung auf dem Beschichtungssektor. Von Nachteil dabei ist jedoch, das zur Verarbeitung größere Mengen organischer Lösemittel erforderlich sind, die z.B. durch eine Nachverbrennung beseitigt werden müssen. In vielen, vor allem nichtindustriellen Anwendungsbereichen ist eine solche Nachverbrennung nicht durchführbar, so daß hier verstärkt festkörperreiche, vor allem jedoch wasserverdünnbare Beschichtungen gefordert werden, um die Lösemittelabgabe und die damit verbundene Umweltbelastung so gering wie möglich zu halten.

Die Verwendung von Wasser als flüssige Phase in Zweikomponenten-Polyurethanlacken mit freien Isocyanatgruppen ist normalerweise nicht ohne weiteres möglich, da Isocyanatgruppen nicht nur mit alkoholischen Hydroxylgruppen, sondern auch mit Wasser unter Bildung von N-substituierten Polyharnstoff-Verbindungen und Abspaltung von Kohlendioxid reagieren. Dadurch werden in der Regel die Standzeit, die Verarbeitungszeit und die Qualität der Überzüge auf nicht praxisgerechte Werte reduziert. Dennoch sind in letzter Zeit viele Anstrengungen unternommen worden, um diese Nachteile zu überwinden.

So wird in der Offenlegungsschrift DE-A 42 26 243 ein wäßriges Zweikomponenten-Überzugsmittel auf Basis von Polyisocyanaten und selbstemulgierenden fettsäuremodifizierten Polyestern und Polyurethanen beschrieben. Auch die europäische Patentanmeldung EP-A 0 496 205 beschreibt wäßrige Bindemittelkombinationen auf Basis von Polyisocyanaten und selbstemulgierenden Urethan-, Carboxyl-, und Hydroxyl-Gruppen aufweisenden Polyesterharzen. In der deutschen Patentschrift DE-C 31 22 030 werden Überzugszusammensetzungen aus Polyisocyanat, wasserverdünnbaren Alkyd-, Melamin- und Acrylharzen beschrieben, die noch wassermischbare Lösemittel enthalten.

Nachteile dieser oben beschriebenen wasserverdünnbaren Zwei-Komponenten-Bindemittel ist der niedrige erreichbare Festkörpergehalt, die relativ niedrige Kochergrenze und die kurze Topfzeit.

Überraschenderweise wurde jetzt gefunden, daß ausgewählte, nachstehend näher beschriebene fremdemulgierte Alkydharze besonders günstige Kombinationspartner mit ausgezeichneter Emulgatorwirkung für nicht blockierte Polyisocyanathärter sind, die sich durch hohe Festkörpergehalte, gute Topfzeiten und hohe Kochergrenzen auszeichnen.

Gegenstand der Erfindung ist daher eine wasserverdünnbare ZweikomponentenÜberzugsmasse, enthaltend
a) eine Polyisocyanatkomponente mit einer Viskosität bei 23 °C von 50 bis 10 000 mPa·s, bestehend aus einem oder mehreren organischen polyfunktionellen Isocyanaten, und
b) eine Alkydharzemulsion, deren Feststoff jeweils einen Massenanteil von
   b1) 60 bis 98 % eines oder mehrerer Alkydharze
   b2) 2 bis 40 % eines oder mehrerer hydroxyfunktioneller Emulgatoren aufweist, und die
   b3) gegebenenfalls bis zu 15 % bezogen auf die Masse der Emulsion an organischen Lösemitteln, sowie
   b4) Wasser enthält.

Gegenstand der Erfindung ist auch ein Verfahren zur Herstellung von Beschichtungsmitteln, die aus einer wäßrigen Bindemittelkombination und gegebenenfalls aus der Lacktechnologie bekannten Hilfs-und Zusatzmitteln bestehen, dadurch gekennzeichnet, daß zunächst das Alkydharz mit Hilfe der Emulgatoren in die wäßrige Phase überführt wird, und daß man anschließend in die wäßrige Emulsion des Alkydharzes eine Polyisocyanatkomponente emulgiert mit einer Viskosität bei 23 °C von 50 bis 10 000 mPa·s, bestehend aus mindestens einem organischen Polyisocyanat. Dabei werden die Mengenverhältnisse der beiden Komponenten so gewählt, daß das Verhältnis der Anzahl der Isocyanatgruppen in der Polyisocyanatkomponente zur Anzahl der Hydroxylgruppen im Alkydharz 0,3:1 bis 5:1 beträgt. Die gegebenenfalls mitverwendeten Hilfs- und Zusatzstoffe werden der fremdemulgierten Alkydharzemulsion vor der Zugabe der Polyisocyanatkomponente einverleibt.

Gegenstand der Erfindung ist schließlich auch die Verwendung der erfindungsgemäßen Bindemittelkombinationen als Bindemittel für Lacke, Beschichtungs- oder Dichtmassen.

Bei der Polyisocyanatkomponente a) handelt es sich um beliebige organische, bei Raumtemperatur flüssige Polyisocyanate, deren Isocyanatgruppen jeweils mit einem aliphatischen, cycloaliphatischen, araliphatischen oder aromatischen Kohlenstoffatom verbunden sind. Die Polyisocyanatkomponente a) weist bei 23 °C im allgemeinen eine Viskosität von 50 bis 10 000, vorzugsweise 50 bis 1000 mPa·s auf. Besonders bevorzugt handelt es sich bei der Polyisocyanatkomponente a) um Polyisocyanate oder Polyisocyanatgemische mit ausschließlich aliphatisch und/oder cycloaliphatisch gebundenen Isocyanatgruppen, einer zwischen 2,2 und 5,0 liegenden (mittleren) NCO-Funktionalität und einer Viskosität bei 23 °C von 50 bis 500 mPa·s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch maximal so bemessen, daß in den letztendlich erhaltenen erfindungsgemäßen Beschichtungsmitteln die Masse von Lösungsmitteln maximal 20 % der Masse an Wasser beträgt, wobei auch das gegebenenfalls in der Alkydharzemulsion noch vorliegende Lösungsmittel mit in die Berechnung eingeht. Als Zusatzmittel für die Polyisocyanate geeignete Lösungsmittel sind beispielsweise aromatische oder aliphatische Kohlenwasserstoffe wie beispielsweise "®Isopar H", Ketone, Ester oder aprotische wassermischbare Lösungsmittel wie beispielsweise N-Methylpyrrolidon.

Als Komponente a) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, besonders bevorzugt sind. Vorzugsweise werden ausschließlich Isocyanate abgeleitet von aliphatischen mehrfunktionellen Isocyanaten eingesetzt.

Sehr gut geeignet sind beispielsweise "Lackpolyisocyanate" abgeleitet von Hexamethylendiisocyanat,1-Isocyanato-3,3,5-trimethyl-4-isocyanatomethylcyclohexan (IPDI) und Bis(isocyanatocyclohexyl)-methan, insbesondere von Hexamethylendiisocyanat. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation, von überschüssigem Ausgangsdiisocyanat bis auf einen restlichen Massenanteil von weniger als 0,5 % befreit worden sind. Besonders bevorzugt sind solche Lackpolyisocyanate, die gänzlich frei von monomeren Anteilen sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N,N-Tris-(6-isocyanatohexyl)isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 500 mPa·s und einer zwischen 2,2 und 5,0 liegenden mittleren NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die ebenfalls im Anschluß an ihre Herstellung vorzugsweise destillativ von überschüssigen monomeren Diisocyanaten befreit worden sind.

Bevorzugt sind auch solche polyfunktionellen Isocyanate, die, um das Verteilen in der wäßrigen Phase zu erleichtern, zumindest anteilsweise mit Polyoxyalkylenglykolen wie Polyoxyäthylenglykol und Polyoxypropylenglykol oder mit ionischen Gruppen modifiziert sind. Besonders bevorzugt beträgt der Massenanteil an derart hydrophil modifizierten polyfunktionellen Isocyanaten mindestens 5 % der gesamten Masse der Isocyanatkomponente. Solche Isocyanate sind zugänglich durch Umsetzung von Diisocyanaten mit hydrophilen Verbindungen mit mindestens zwei Isocyanat-reaktiven Gruppen und mindestens einer Gruppe ausgewählt aus Polyoxyäthylen- und Polyoxypropylen-Gruppen sowie ionischen oder ionogenen Gruppen.

Für den erfindungsgemäßen Einsatz als Komponente a) werden besonders bevorzugt sterisch gehinderte Polyisocyanate mit 4 bis 25, vorzugsweise 4 bis 16 C-Atomen, die in 2-Stellung zur NCO-Gruppe eine oder zwei lineare, verzweigte oder cyclische Alkylgruppen mit 1 bis 12, bevorzugt 1 bis 4 C-Atomen enthalten. Beispiele hierfür sind 1,1,6,6-Tetramethyl-hexamethylendiisocyanat, 1,5-Dibutylpentamethylendiisocyanat, sowie p- oder m-Tetramethylxylylendiisocyanat (TMXDI).

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Die Polyisocyanatkomponente a) kann im übrigen aus beliebigen Gemischen der beispielhaft genannten Polyisocyanate bestehen.

Die erfindungsgemäß geeigneten Alkydharze b1) sind Polyester, die mit Fettsäuren modifiziert sind. Die Herstellung der Alkydharze erfolgt aus gesättigten und/oder ungesättigten Fettsäuren oder Ölen, Polyalkoholen und Polycarbonsäuren. Die Fettsäuren können zumindest teilweise durch andere Monocarbonsäuren ersetzt sein.

Unter Fettsäuren werden im allgemeinen lineare oder verzweigte Monocarbonsäuren mit 6 bis 35 C-Atomen verstanden. Die Fettsäuren können nichttrocknend oder trocknend sein. Beispiele für geeignete nicht-trocknende Fettsäuren sind bevorzugt gesättigte und einfach ungesättigte lineare oder verzweigte aliphatische Monocarbonsäuren, bevorzugt mit einer Anzahl von Kohlenstoffatomen von 6 bis 18.

Beispiele für geeignete trocknende Fettsäuren sind ungesättigte Fettsäuren oder Fettsäuregemische, die mindestens eine Monocarbonsäure mit mindestens zwei isolierten oder konjugierten Doppelbindungen enthalten und eine Jodzahl über 125 g/(100 g) haben. Bevorzugt werden ungesättigte Fettsäuren mit einer linearen Kohlenstoffkette mit 16 bis 18 Kohlenstoffatomen.

Spezielle Beispiele für geeignete nichttrocknende Fettsäuren sind 2-Äthylhexansäure, Isononansäure, Versaticsäure oder Cocosfettsäure sowie Ölsäure. Als trocknende Fettsäuren werden beispielsweise bevorzugt ungesättigte Monocarbonsäuren mit einer Jodzahl über 125 g/(100 g) und 18 Kohlenstoffatomen verstanden. Hierunter fallen besonders ungesättigte Fettsäuren mit zwei oder drei isolierten Doppelbindungen verschiedener sterischer Konfiguration oder entsprechende mehrfach ungesättigte Fettsäuren mit konjugierten Doppelbindungen. Solche Fettsäuren sind beispielsweise in natürlichen Ölen wie Leinöl, Sojaöl, Saffloröl, Baumwollsaatöl oder Ricinusöl, Sonnenblumenöl, Erdnußöl, Holzöl und Ricinenöl enthalten. Die daraus gewonnenen ungesättigten Fettsäuren sind Leinölfettsäure, Safflorölfettsäure, Tallölfettsäure, Baumwollsaatfettsäure, Erdnußölfettsäure, Holzölfettsäure, Ricinenfettsäure oder Sonnenblumenölfettsäure.

Um die Fettsäuren in die Alkydharze einzubauen, können einerseits die Fettsäuren mit den Alkoholkomponenten verestert werden, sie können aber auch durch Umesterungsreaktionen der Öle in das Alkydharz eingeführt werden.

Es können auch sogenannte technische Öle als Fettsäuren eingesetzt werden, die im allgemeinen Mischungen von cis-Linolensäure, Linolsäure, Ölsäure und Stearinsäure sind. Die technischen Öle bzw. Fettsäuren können als solche eingesetzt werden, oder sie werden durch Umesterungsreaktionen oder nach Dehydratisierungsreaktionen (Ricinenfettsäure) in das Alkydharz eingebaut.

Bei Verwendung von mehrfach ungesättigten Fettsäuren werden besonders bevorzugt Mischungen aus isoliert und konjugiert ungesättigten Fettsäuren, z. B. mit einem Massenanteil von 10 bis 80 % an konjugiert ungesättigten Fettsäuren, eingesetzt.

Der Massenanteil an eingebauten gesättigten und ungesättigten Fettsäuren bezogen auf die Masse des Festharzes beträgt 10 bis 80 %, bevorzugt 20 bis 70 %. Von der Masse an gesättigten und ungesättigten Fettsäuren entfallen besonders bevorzugt 10 bis 60 % auf ungesättigte Fettsäuren mit konjugierten Doppelbindungen. Für nicht vergilbende Harze werden gesättigte Monocarbonsäuren oder Fettsäuren mit einer oder zwei isolierten Doppelbindungen bevorzugt. Die gewonnenen Fettsäuren können durch fraktionierte Destillation, Isomerisierung oder Konjugierung chemisch optimiert sein. Zur Modifizierung der Eigenschaften des Alkydharzes können bis zu 15 % der Masse der ungesättigten Fettsäuren durch andere Monocarbonsäuren wie Benzoesäure, tert-Butylbenzoesäure, Hexahydrobenzoesäure, Äthylhexansäure oder Abietinsäure ersetzt sein.

Unter Monocarbonsäuren, die mit den Fettsäuren zumindest teilweise mitverwendet werden können, werden beispielsweise alicyclische oder aromatische Monocarbonsäuren mit 6 bis 35 C-Atomen verstanden. Sie können gegebenenfalls substituiert sein.

Geeignete Polycarbonsäuren enthalten beispielsweise zwei und mehr Carboxylgruppen an einem Kohlenwasserstoffgerüst mit beispielsweise 4 bis 36 C-Atomen. Einsetzbar sind auch die veresterungsfähigen Derivate der Polycarbonsäuren, wie Anhydride oder Methylester. Die bevorzugt eingesetzten Dicarbonsäuren sind linear oder verzweigt aliphatisch, alicyclisch oder aromatisch aufgebaut.

Geeignete Beispiele für Dicarbonsäuren und deren Derivate sind Phthalsäureanhydrid, Isophthalsäure, mit niederen Alkylgruppen (C₁- bis C₆-Alkylgruppen) substituierte Isophthalsäure, Terephthalsäuredimethylester, Tetrahydro- und Hexahydrophthalsäureanhydrid, Bernsteinsäureanhydrid, Methyltetrahydrophthalsäureanhydrid, Fumarsäure, Maleinsäureanhydrid, Adipinsäure, 2,2,4-Trimethyladipinsäure, Azelainsäure, Sebacinsäure, dimerisierte Fettsäuren, Cyclopentandicarbonsäure, 1,3-und 1,4-Cyclohexandicarbonsäuren, Norbornendicarbonsäure, Endoäthylencyclohexandicarbonsäure oder halogenierte Dicarbonsäuren wie Chlorphthalsäureanhydrid und Hexachlorendomethylentetrahydrophthalsäureanhydrid oder deren Mischungen. Höhertunktionelle Polycarbonsäuren und deren Derivate wie Trimellithsäureanhydrid, Pyromellithsäureanhydrid oder Bisanhydride, können anteilsweise eingebaut werden, bevorzugt können bis zu 10 % der Dicarbonsäuren durch Polycarbonsäuren oder deren Derivate ersetzt werden. Eine geeignete Tricarbonsäure kann auch durch substituierende Addition oder Diels-Alder-Reaktion von Maleinsäureanhydrid oder (Meth)acrylsäure an eine ungesättigte Fettsäure erhalten werden.

Für die Synthese der Alkydharze bevorzugte Alkohole sind aliphatische, cycloaliphatische und araliphatische Alkohole mit 2 bis 6 Hydroxylgruppen und 2 bis 24 C-Atomen pro Molekül mit einer molaren Masse von 62 bis 434 g/mol. Die Alkohole können primäre, sekundäre und tertiäre Hydroxylgruppen aufweisen. Die lineare oder verzweigte, gegebenenfalls substituierte Kohlenstoffkette kann gegebenenfalls durch Äther- oder Estergruppen unterbrochen sein.

So werden beispielsweise als Diole eingesetzt Glykole wie Äthylenglykol, Propylenglykol, Butandiol-1,4, Pentandiol-1,6, Hexandiol-1,6, Decandiol-1,2, 2,2-Äthylbutyl-propandiol-1,3, 2,2-Dimethyl-propandiol-1,3, Cyclohexandimethanol, 1,1-Isopropyliden-bis-(p-phenoxy)di-1-äthanol, 1,1-Isopropyliden-bis-(p-phenoxy)-di-2-propanol, Di-(hydroxyäthyl)-5,5-dimethylhydantoin, sowie die hydrierten Bisphenole A und F. Als Ätheralkohole werden beispielsweise Diäthylenglykol, Triäthylenglykol, Dipropylenglykol oder Tripropylenglykol, sowie äthoxylierte oder propoxylierte Bisphenol A oder F-Produkte verwendet.

Beispiele für höherfunktionelle Polyole sind Glycerin, Trimethyloläthan, Trimethylolpropan, Trimethylolhexan, Di-trimethylolpropan, 2,2-Dimethylol-butanol-(3), 2,2-(Bis-hydroxymethyl)-butanol-(1), Pentaerythrit, Dipentaerythrit, Tripentaerythrit, Tris-(2-hydroxyäthyl)-isocyanurat, sowie äthoxylierte oder propoxylierte mehrwertige Alkohole wie Trimethylolpropan, Pentaerythrit, und Zuckeralkohole wie Mannit oder Sorbit und deren Mischungen.

Primäre, kettenabbrechend wirkende Mono-Alkohole wie Isodecanol, Cyclohexanol, Benzylalkohol oder Fettalkohole können anteilig, bevorzugt bei Verwendung von mehr als zweibasigen Carbonsäuren, mit einkondensiert werden.

Die Herstellung der Alkydharze kann durch Polykondensation nach bekannten Verfahren erfolgen, wie sie beispielsweise in S. Paul, Surface Coatings, S. 70 bis 139, John Wiley & Sons, New York,1985 beschrieben sind.

Die Polykondensation kann durch Erwärmen in der Schmelze oder im Azeotropverfahren unter Wasserabspaltung durchgeführt werden. Die gewünschte Zahl von Hydroxyl- und Säuregruppen kann durch geeignete Wahl der Äquivalenzverhältnisse, eine geeignete Reaktionsführung und gegebenenfalls ein stufenweises Arbeiten eingeführt werden. Die geeigneten Verfahrensbedingungen und Auswahlkriterien sind dem Fachmann geläufig.

Geeignete hydroxyfunktionelle Emulgatoren sind Alkylphenole bzw. Alkylphenoläthoxylate, Alkyläthoxylate, Alkylglykoside, wie sie z.B. in DE 34 04 558 beschrieben sind, Alkylpolysaccharide, Sorbitmono- und -diester, äthoxylierte Sorbitester, Sorbithexaester, Propylenoxid-Äthylenoxid-Copolymere, Polyvinylalkohole oder teilverseifte Polyvinylacetate, wasserlösliche hydroxyfunktionelle Polymerisate, Polykondensate und Polyaddukte.

Geeignet sind wasserlösliche hydroxyfunktionelle Polyester, die durch Verwendung von Polyäthylenglykol als hydrophile Komponente und/oder wegen einer hohen Säurezahl wasserlöslich sind.

Besonders bevorzugt sind Hydroxylgruppen enthaltende Polyurethane oder Polyurethan-Polyharnstoffe, die durch Umsetzung von mehrfunktionellen Isocyanaten mit unter anderem hydroxyfunktionellen Polyestern oder Polyäthern als hydrophobe Komponente, wobei die Polyester durch Kondensation aus den oben bereits beschriebenen Polycarbonsäuren und Polyolen erhalten werden, und Polyäthylenglykol und/oder Dihydroxysäuren wie z.B. Dimethylolpropionsäure als hydrophile Komponente und gegebenenfalls Kettenverlängerung mit Polyaminen hergestellt werden können. Diese Polyurethane oder Polyurethanharnstoffe werden beispielsweise in Substanz oder in inerten Lösemitteln durch Zugabe von Diisocyanaten zu den Hydroxylkomponenten oder durch Kettenverlängerung isocyanatfunktioneller Präpolymerer in der wäßrigen Phase mit Polyaminen hergestellt.

Zur Herstellung der Alkydharzemulsionen werden zunächst diese Alkydharze mit den oben beschriebenen Emulgatoren oder Emulgatordispersionen gemischt, gegebenenfalls in Anwesenheit der oben beschriebenen inerten Lösemitteln.

In den Gemischen liegen 40 bis 97, vorzugsweise 50 bis 95 Gewichtsteile der genannten hydrophoben Alkydharze in Abmischung mit 3 bis 60, vorzugsweise 5 bis 50 Gewichtsteilen der genannten Emulgatoren bzw. Emulgatordispersionen vor. Es ist jedoch wichtig, Art und Mengenverhältnisse der Einzelkomponenten im Rahmen der gemachten Ausführungen so zu wählen, daß der Massenanteil an von der Komponente b2) herrührenden Äthylenoxideinheiten in den in Wasser dispergierbaren Gemischen maximal 20, vorzugsweise maximal 15 % der Masse des Feststoffs (b1 + b2), beträgt.

Die Herstellung der Gemische kann durch einfaches Abmischen der Kunstharze mit den Emulgatoren bzw. wäßrigen Emulgatordispersionen, gegebenenfalls in Gegenwart von weiteren Lösungsmitteln, wie zum Beispiel Kohlenwasserstoffen, Alkoholen, Ketonen, Glykoläthern oder N-Methylpyrrolidon, erfolgen.

Zur Herstellung der erfindungsgemäßen wäßrigen Kunstharzdispersionen werden die erfindungsgemäßen Gemische in Wasser dispergiert, was sowohl durch einfaches Einrühren von Wasser in die vorgelegte Mischung der Kunstharze mit dem Emulgator mittels üblicher Dissolver oder Rührer, wie auch durch Eingießen der Mischung in Wasser unter heftigem Rühren erfolgen kann. Gegebenenfalls kann zunächst ein Teil des Wassers zu der oben beschriebenen Mischung gegeben werden und dann diese Mischung unter Rühren in die Restmenge Wasser gegossen werden. Es können auf diese Weise stabile Öl-in-Wasser-Emulsionen erhalten werden.

Zur Herstellung der Alkydharzemulsion kann auch zunächst eine wäßrige Lösung des Emulgators hergestellt werden, in die dann unter starker Scherung das Alkydharz eingerührt wird.

Die gebrauchsfertigen Beschichtungsmittel werden durch Einemulgierung der Polyisocyanatkomponente a) in der wäßrigen Emulsion des Alkydharzes b) erhalten, wobei die Alkydharzemulsion die Funktion eines Emulgators für das zugesetzte Polyisocyanat a) übernimmt. Dies gilt insbesondere für den bevorzugten Fall der Verwendung von nicht hydrophil modifizierten Polyisocyanaten a). Möglich, jedoch nicht bevorzugt ist die Verwendung von hydrophil modifizierten Polyisocyanaten als Polyisocyanatkomponente a), die aufgrund der eingebauten ionischen oder nichtionischen hydrophilen Zentren selbstdispergierbar sind.

Die Durchmischung kann durch einfaches Verrühren bei Raumtemperatur erfolgen. Die Menge der Polyisocyanatkomponente wird dabei so bemessen, daß ein Verhältnis der Anzahl der Isocyanatgruppen der Komponente a) zur Anzahl der alkoholischen Hydroxylgruppen der Komponente b) von 0,3:1 bis 5:1, vorzugsweise 0,5:1 bis 4:1, besonders bevorzugt 0,8:1 bis 3:1, resultiert.

Vor der Zugabe der Polyisocyanatkomponente a) können der fremdemulgierten Alkydharzemulsion b) die üblichen Hilfs- und Zusatzmittel der Lacktechnologie einverleibt werden. Diese können auch in der Polyisocyanatkomponente a) enthalten sein.

Die erfindungsgemäßen Dispersionen können, falls gewünscht, vor, während oder nach ihrer Herstellung durch Zusatz von anderen Polymeren, z.B. Polyacrylaten, Polyurethanen, Hartharzen oder Polyester in Lösungs- oder Dispersionsform modifiziert werden. Tragen die zusätzlichen Bindemittel reaktive Gruppen wie beispielsweise Hydroxylgruppen, so sind diese bei dem Mischungsverhältnis der Komponenten a) und b) zu berücksichtigen.

Die erfindungsgemäßen Überzugsmittel bestehen aus den oben beschriebenen Hydroxylgruppen-haltigen wasserdispergierbaren Bindemitteln und den Isocyanaten. Sie können als Hilfs- und Zusatzmittel beispielsweise Pigmente, Füllstoffe, lacktechnische Additive, Emulgatoren, die bevorzugt während der Verfilmung über reaktive Doppelbindungen oder Hydroxylgruppen in das Netzwerk einreagieren, besonders nichtionische Emulgatoren, Verlaufsmittel, Entschäumer, Rheologiehilfsmittel, Katalysatoren, Sikkative sowie weitere Bindemittel enthalten. Die Zusätze dienen zur Beeinflussung von lacktechnischen Eigenschaften, wie z.B Aushärtungsdauer, Oberflächengüte oder zur Beeinflussung von anwendungstechnischen Eigenschaften wie z.B der Viskosität.

Um eine gute Dispergierbarkeit der Polyisocyanate zu erzielen, kann eine geeignete niedrige Viskosität eingestellt werden. Hierzu dient auch das Lösen von hochviskosen oder festen Polyisocyanaten in wassermischbaren organischen Lösemitteln, die nicht oder nur langsam mit Isocyanaten reagieren. Nichtreaktive Lösemittel sind beispielsweise Glykoldialkyläther, wie Glykoldimethyläther, Ester wie Äthylglykolacetat, Ketone wie Aceton, cyclische Äther wie Dioxan oder Lactame wie N-Methylpyrrolidon. Bevorzugt werden Alkohole mit sterisch gehinderten Alkoholgruppen, Ketonalkohole oder Alkoxyalkohole, wie Butoxyäthanol, Butyldiglykol, Methoxyisopropanol oder Diacetonalkohol. Mit ihnen wird kurz vor der Verarbeitung ohne Erwärmen eine Polyisocyanat-Lösung hergestellt, die bei einem Festkörper-Massenanteil von über 40 %, bevorzugt 50 bis 95 %, eine Viskosität von 0,5 bis 2000 mPa·s, bevorzugt 1 bis 20 mPa·s hat.

Als Pigmente sind die üblichen Pigmente geeignet, wie beispielsweise in DIN 55 944 beschrieben: bevorzugt Ruß, Titandioxid, feindisperses Siliciumdioxid, Aluminiumsilikat, Metallpulver oder -plättchen, organische und anorganische Farbpigmente, Korrosionsschutzpigmente, wie Blei- und Chromatverbindungen, und Metalleffektpigmente. Zusätzlich zu den Pigmenten und Füllstoffen können gegebenenfalls übliche organische Farbstoffe eingesetzt werden. Ebenfalls ist es möglich, Anteile von vernetzten organischen Mikroteilchen zuzusetzen.

Die Verfahren zur Herstellung der Überzugsmittel aus den Einzelkomponenten sind bekannt. Beispielsweise ist es möglich, die Pigmente in einem besonders geeigneten Anreibeharz zu dispergieren und gegebenenfalls auf die notwendige Kornfeinheit zu vermahlen. Eine andere Arbeitsweise sieht vor, die Pigmente in der wäßrigen Dispersion der Bindemittelkomponente b) zu vermahlen.

Dabei ist darauf zu achten, daß während des Mahlprozesses die Stabilität der wäßrigen Dispersion nicht beeinflußt wird. Nach dem Dispergieren der Pigmente ist es möglich, weitere Bindemittelanteile zuzufügen. Dabei kann es sich um die erfindungsgemäßen fremdemulgierten Alkydharze handeln sowie gegebenenfalls weitere der oben beschriebenen Bindemittel. Gegebenenfalls können weitere lacktechnische Hilfsmittel zur Beeinflussung von Eigenschaften wie z.B. Dispergierbarkeit, zugesetzt werden.

Gemäß einer weiteren bevorzugten Arbeitsweise mischt man die fremdemulgierten Alkydharze oder gegebenenfalls andere übliche Pastenharze zunächst mit wenig Wasser, gegebenenfalls unter Zugabe von Füllstoffen, Pigmenten, Farbstoffen und dergleichen, und dispergiert diese Mischung auf einem Walzenstuhl oder in einer Kugelmühle zu Pasten. Aus diesen können dann durch Verdünnen mit weiterem Wasser und gegebenenfalls unter Zugabe weiterer Harzemulsion und Additiven die gebrauchsfertigen Lackzubereitungen hergestellt werden.

Gegebenenfalls können auch Pigmente oder lacktechnische Hilfsstoffe in der Komponente a) vorhanden sein. Diese lacktechnische Komponente ist im allgemeinen nicht wäßrig. Sie ist jedoch in der wäßrigen Alkydharzemulsion dispergierbar. Sie kann gegebenenfalls geringe Anteile an organischen Lösemitteln enthalten, um eine zur Dispergierung geeignete Viskosität einzustellen. Es ist darauf zu achten, daß die Additive nicht mit der Isocyanatkomponente reagieren dürfen. Das kurzzeitige Mischen von Isocyanaten mit Alkoholen, wie Butoxyäthanol oder Diacetonalkohol, ist möglich.

Die erfindungsgemäßen Überzugsmittel können durch übliche Techniken, wie z.B Tauchen, Spritzen, Rollen, auf die zu lackierenden Materialien aufgetragen werden. Danach vernetzt der aufgetragene Film.

Das Vernetzen kann bei Temperaturen von beispielsweise 0 °C bis 150 °C durchgeführt werden. Die erfindungsgemäßen Überzugsmittel können vorteilhaft bei relativ niedrigen Temperaturen gehärtet werden, beispielsweise bei Temperaturen über 10 °C und unter 80 °C, insbesondere unter 60 °C. Gegebenenfalls kann dem Vernetzen eine Ablüftzeit vorgeschaltet werden.

Die applizierten Schichtdicken richten sich nach dem Verwendungszweck des Überzugsmittels. Beispielsweise weisen Klarlacküberzüge eine Schichtdicke bis zu 60 µm auf, pigmentierte Basis- oder Decklacküberzüge von 10 bis 50 µm, Überzüge als Füller oder Steinschlagschutzüberzüge eine Schichtdicke von 30 bis 100 µm und Überzüge als Korrosionsschutzgrundierung eine Schichtdicke von 20 bis 70 µm.

Das erfindungsgemäße Überzugsmittel eignet sich für Einschicht- und Decklackierungen sowie für Grundierungen.

Als Substrate sind beliebige Untergründe geeignet, beispielsweise Metallsubstrate, wie Eisen, Aluminium oder Zink, nichtmetallische Substrate, wie mineralische Substrate (z.B Beton, Glas), Holz, Kunststoffsubstrate, wie Polyolefine, Polycarbonate, Polyurethane sowie gegebenenfalls mit Vorbeschichtungen versehene Substrate. Bei der Applikation kann auf ein getrocknetes oder vernetztes beschichtetes Substrat aufgetragen werden. Es ist auch möglich, nach dem Verfahren "naß-in-naß" zu arbeiten. Hierzu kann das erfindungsgemäße Überzugsmittel auf einen mit einem nicht vernetzten Überzugsmittel versehenen Untergrund, gegebenenfalls nach kurzer Ablüftphase aufgetragen werden. Auch ist es möglich, auf das erfindungsgemäße Überzugsmittel ohne vorherige Trocknung bzw. Vernetzung, gegebenenfalls nach kurzer Ablüftphase, ein weiteres Überzugsmittel aufzubringen. Es kann sich bei dem weiteren Überzugsmittel nochmals um ein Überzugsmittel auf der Basis der vorliegenden Erfindung oder um ein anderes Überzugsmittel handeln. Danach findet eine gemeinsame Vernetzung der Überzugsschichten statt.

Das erfindungsgemäße Überzugsmittel eignet sich besonders zum Einsatz in der Mehrschichtlackierung, wobei mindestens eine Schicht mit einem erfindungsgemäßen Überzugsmittel hergestellt wird. Dabei können je nach Pigmentierung beispielsweise Klarlacküberzugsmittel, Basislack-, oder Decklacküberzugsmittel sowie Steinschlagschutz-Überzugsmittel, Füller oder Primer hergestellt werden. Bevorzugt ist die Verwendung als Klarlacküberzugsmittel, aufgetragen auf eine Basisschicht auf Basis eines wäßrigen oder lösemittelhaltigen Überzugsmittels. Die so erhaltenen Überzüge zeichnen sich durch eine hohe Kratzfestigkeit, durch ein hohes Glanzhaltungsvermögen sowie durch eine erhöhte Beständigkeit aus.

Die folgenden Beispiele erläutern die Erfindung. Alle Angaben von Gehalten, Teilen und Zahlenwerten in Prozent bedeuten im Folgenden Massenanteile, sofern nicht anders gekennzeichnet.

### Beispiele

### Hydroxyfunktioneller Emulgator E1

26,8 g Dimethylolpropionsäure werden bei ca. 80 °C in 100 g Polyäthylenglykol 1000 (mittlere molare Masse Mₙ ca. 1000 g/mol) suspendiert. Nach Erwärmen auf 70 °C wird dann 51 g Tetramethylxylylendiisocyanat (TMXDI) und 36,6 g Toluylendiisocyanat (TDI) so zugetropft, daß eine Temperatur von 70 °C nicht überschritten wird (ca. 30 min). Hat man alles Isocyanat zugetropft, so läßt man eine Stunde bei der Temperatur nachrühren und steigert dann die Reaktionstemperatur auf 90 °C. Man hält die Temperatur solange, bis der Isocyanatgehalt auf 3,8 % gefallen ist. Dann wird 30 g ®Genapol O-100 (oxyäthylierter Fettalkohol) und 60 g eines Polyesters aus Isophthalsäure, Adipinsäure, Neopentylglykol und Trimethylolpropan (OH-Zahl 107 mg/g, Säurezahl 3 mg/g) zugegeben und bei 90 °C solange gerührt, bis der NCO-Gehalt auf 1,4 % gefallen ist. Dann wird unter heftigem Rühren 400 g erwärmtes voll entsalztes Wasser (E-Wasser) innerhalb von 10 Minuten zugegeben. Direkt im Anschluß wird 3,75 g Triäthylentetramin, gelöst in 37,5 g E-Wasser, schnell (ca. 5 min) zugetropft. Nach Zugabe von 4,5 g Triäthylamin und einer Reaktionszeit von 3 Stunden bei 80 °C werden weitere 4,4 g Triäthylamin und 1000 g E-Wasser zugegeben, danach wird abgekühlt. Man erhält eine pastöse Dispersion.

### Alkydharzemulsion A1

Zu 200 g eines handelsüblichen Alkydharzes mit einem Ölgehalt von 34 % (z.B. ®Alftalat AF 342 100 %) werden 220 g der oben beschriebenen Emulgatoremulsion E1 zugegeben und bei 70 °C ca. 60 min gerührt, bis die Mischung homogen ist.

Nach Zugabe von 1 ml Ammoniakwasser (25 %) wird 70 g auf 70 °C erwärmtes E-Wasser sehr langsam unter heftigem Rühren zugetropft (ca. 2 Stunden). Man erhält eine milchige strukturviskose Dispersion.

### Alkydharzemulsion A2

Zu 200 g eines handelsüblichen Alkydharzes mit einem Ölgehalt von 42 % (z.B. ®Alftalat AM 424 100 %) werden 40 g ®Genapol O-100 (äthoxylierter Fettalkohol) und 10 g Butylglykol zugegeben; bei 70 °C wird ca. 60 min gerührt, bis die Mischung homogen ist.
Nach Zugabe von 2 ml Ammoniakwasser (25 %) wird 230 g auf 70 °C erwärmtes E-Wasser sehr langsam unter heftigem Rühren zugetropft (ca. 4 Stunden). Man erhält eine milchige Dispersion.

### Überzugsmittel

19,5 g der fremdemulgierten Alkydharzemulsion A1 werden mit 2 g Methoxypropylacetat verdünnt und mit 6 g eines Polyisocyanats (®Bayhydur LS 2980) gemischt. Die Topfzeit dieser Mischung beträgt über 4 Stunden. Die bei Raumtemperatur ausgehärteten Filme waren klebfrei, klar und vernetzt und zeigten einen guten Verlauf. Nach 30 min Trocknung bei 80 °C und 16 Stunden bei 60 °C wurden Pendelhärten von über 100 s gemessen, die nach einer weiteren Woche bei Raumtemperatur auf über 150 s anstiegen. Die Lösemittelbeständigkeit der so gehärteten Filme (Xylol, 5 min) war ausgezeichnet.

Ähnliche Ergebnisse werden mit der Alkydharzemulsion A2 erhalten.

## Patentansprüche

1. Wasserverdünnbare Zweikomponenten-Überzugsmasse, enthaltend
a) eine Isocyanatkomponente mit einer Viskosität bei 23 °C von 50 bis 10 000 mPa·s, bestehend aus einem oder mehreren organischen polyfunktionellen Isocyanaten, und
b) eine Alkydharzemulsion, deren Feststoff jeweils Massenanteile von
b1) 60 bis 98 % eines oder mehrerer Alkydharze,
b2) 2 bis 40 % eines oder mehrerer hydroxyfunktioneller Emulgatoren enthält,
b3) und die gegebenenfalls bis zu 15 % bezogen auf die Masse der Emulsion organische Lösemittel, sowie
b4) Wasser enthält.

2. Wasserverdünnbare Zweikomponenten-Überzugsmasse nach Anspruch 1, dadurch gekennzeichnet, daß die Isocyanatkomponente a) eine mittlere Isocyanat-Funktionalität von 2,2 bis 5 aufweist.

3. Wasserverdünnbare Zweikomponenten-Überzugsmasse nach Anspruch 1, dadurch gekennzeichnet, daß das Verhältnis der Anzahl der Isocyanatgruppen in der Komponente a) zur Anzahl der Hydroxylgruppen in dem Alkydharz b1) 0,3:1 bis 5:1 beträgt.

4. Wasserverdünnbare Zweikomponenten-Überzugsmasse nach Anspruch 1, dadurch gekennzeichnet, daß als Bestandteile der Isocyanatkomponente a) Derivate von Diisocyanaten eingesetzt werden mit Strukturen ausgewählt aus Biuret-, Urethan-, Uretdion- und Isocyanurat-Strukturen.

5. Wasserverdünnbare Zweikomponenten-Überzugsmasse nach Anspruch 1, dadurch gekennzeichnet, daß die polyfunktionellen Isocyanate ausschließlich aliphatische Strukturen enthalten.

6. Wasserverdünnbare Zweikomponenten-Überzugsmasse nach Anspruch 1, dadurch gekennzeichnet, daß die Isocyanatkomponente a) weniger als 0,5 % an monomeren Diisocyanaten enthält.

7. Wasserverdünnbare Zweikomponenten-Überzugsmasse nach Anspruch 1, dadurch gekennzeichnet, daß die Isocyanatkomponente mindestens 5 % eines mehrfunktionellen Isocyanats enthält, das zugänglich ist durch Umsetzung eines Diisocyanats mit einer hydrophilen Komponente enthaltend mindestens zwei isocyanatreaktive Gruppen und mindestens eine Gruppe ausgewählt aus Polyoxyäthylen- und Polyoxypropylengruppen und ionischen oder ionogenen Gruppen.

8. Wasserverdünnbare Zweikomponenten-Überzugsmasse nach Anspruch 4, dadurch gekennzeichnet, daß die mehrfunktionellen Isocyanate durch Umsetzung von sterisch gehinderten Diisocyanaten mit 4 bis 25 Kohlenstoffatomen erhalten werden.

9. Wasserverdünnbare Zweikomponenten-Überzugsmasse nach Anspruch 1, dadurch gekennzeichnet, daß der Massenanteil an gesättigten und ungesättigten Fettsäuren in der Alkydharzkomponente b1) 10 bis 80 % beträgt.

10. Wasserverdünnbare Zweikomponenten-Überzugsmasse nach Anspruch 1, dadurch gekennzeichnet, daß der Massenanteil an gesättigten und ungesättigten Fettsäuren in der Alkydharzkomponente b1) 20 bis 70 % beträgt.

11. Wasserverdünnbare Zweikomponenten-Überzugsmasse nach Anspruch 7, dadurch gekennzeichnet, daß der Massenanteil an Polyoxyalkylengruppen im Feststoff der Alkydharz-Emulsion (b1) + b2)) maximal 20 % beträgt.

12. Wasserverdünnbare Zweikomponenten-Überzugsmasse nach Anspruch 1, dadurch gekennzeichnet, daß die Emulgatorkomponente b2) eine hydroxyfunktionelle Polyurethan-Polyharnstoff-Dispersion ist.

13. Wasserverdünnbare Zweikomponenten-Überzugsmasse nach Anspruch 1, dadurch gekennzeichnet, daß die Emulgatorkomponente b2) durch Kettenverlängerung eines polyäthylenglykolhaltigen isocyanatfunktionellen Präpolymers mit Polyaminen in wäßriger Phase erhalten wird.

14. Verfahren zur Herstellung von Beschichtungsmitteln, dadurch gekennzeichnet, daß in einem ersten Schritt ein Alkydharz mit Hilfe von hydroxyfunktionellen Emulgatoren in die wäßrige Phase überführt wird, und anschließend eine Polyisocyanatkomponente in dieser Emulsion emulgiert wird.

15. Verfahren zur Herstellung von Beschichtungen unter Verwendung einer wäßrigen Zweikomponenten-Überzugsmasse nach Anspruch 1.

16. Verfahren zur Herstellung von mehrschichtigen Überzügen, wobei mindestens eines der eingesetzten Beschichtungsmittel eine Zweikomponenten-Überzugsmasse gemäß Anspruch 1 enthält.

17. Verwendung von Überzugsmassen nach Anspruch 1 zur Herstellung von Einschicht- oder Decklacken.

18. Verwendung von Überzugsmassen nach Anspruch 1 zur Herstellung von Grundierungen.
